# EUROPEAN PATENT SPECIFICATION

(11) **EP 2 499 344 B1**
(45) Date of publication and mention of the grant of the patent: **04.12.2019**
(21) Application number: 10742330.3
(22) Date of filing: 19.07.2010
(51) Int. Cl.: F01P 3/20, B60K 11/02, F25B 27/02

(54) **DUAL USE COOLING SYSTEMS**
KÜHLSYSTEME MIT ZWEIFACHVERWENDUNG
SYSTÈMES DE REFROIDISSEMENT À DOUBLE USAGE

(30) Priority: 28.08.2009 US 550131; 27.01.2010 US 694381
(43) Date of publication of application: 19.09.2012
(73) Proprietor: The Boeing Company, Chicago, IL 60606-1596 (US)
(72) Inventor: GAO, Lijun, Kent, Washington 98031 (US); CHIEN, Chin-Hsi, Bellevue, Washington 98005 (US); LIU, Shengyi, Sammamish, Washington 98075 (US)
(74) Representative: Boult Wade Tennant LLP
(86) International application number: PCT/US2010/042402
(87) International publication number: WO 2011/031376

(56) References cited:
- EP-A1- 1 679 480
- EP-A2- 1 038 701
- WO-A1-2004/092662
- US-A1- 2005 263 176
- US-A1- 2006 225 441

## Description

### FIELD OF THE DISCLOSURE

The present disclosure is generally related to cooling systems and methods of use.

### BACKGROUND

Multiple heat sources that require temperature control may be present in some systems. For example, some vehicles include an engine that generates heat and electronics that generate heat. These vehicles may include an engine cooling system to cool the engine and an auxiliary cooling system to cool the electronics, etc. The engine cooling system and the auxiliary cooling system may be separate systems due at least in part to a large difference in operating temperatures between the engine and the electronics.

US-A1-2006/225441 is directed towards a heating, ventilation and air conditioning system for a vehicle that operates in a heating mode, a cooling mode or a demisting mode. The system includes a first circuit having first pump for circulating a first medium therein, a second circuit having a second pump for circulating a second medium therein and a thermoelectric module having a first surface in thermal contact with the first medium and a second surface in thermal contact with the second medium.

WO-A1-2004/092662 is directed towards an energy recovery system for hybrid automobile. The energy recovery system generates electricity by utilizing the temperature difference between a high temperature thermal medium and a low temperature thermal medium. As the high temperature thermal medium, engine coolant for cooling an engine is used. As the low temperature thermal medium, pump refrigerant for cooling by a heat pump is used. The heat pump maintains the pump refrigerant at a low temperature by using heat from the engine coolant. Therefore, while electricity is generated at a thermoelectric converter, energy is used for cooling the pump refrigerant.

### SUMMARY

Cooling systems and methods of use are disclosed.
There is provided a system, comprising: an engine having an engine coolant inlet and an engine coolant outlet; a first heat exchanger having a first heat exchanger inlet and a first heat exchanger outlet; a second heat exchanger having a second heat exchanger inlet and a second heat exchanger outlet, the second heat exchanger outlet coupled to the engine coolant inlet; a thermoelectric cooling device in thermal communication with the second heat exchanger; and one or more conduits to transport coolant; wherein a first portion of a coolant flow from the first heat exchanger outlet is routed to the second heat exchanger inlet to receive heat output from one or more devices in thermal communication with the thermoelectric cooling device, and wherein a second portion of the coolant flow from the first heat exchanger outlet is routed to the engine coolant inlet to receive heat output by the engine, and wherein the first portion of the coolant is the same portion of the coolant as the second portion of the coolant.

There is also provided a vehicle, comprising: an engine; a thermoelectric cooling device to cool one or more components of the vehicle; a first heat exchanger to receive heat from a hot side of the thermoelectric cooling device; and a second heat exchanger to remove heat from a coolant, wherein a second portion of the coolant is supplied from the second heat exchanger to the engine and a first portion of the coolant is supplied from the first heat exchanger to the second heat exchanger, wherein the first portion of the coolant is the same portion of the coolant as the second portion of the coolant.

There is also provided a method, comprising: routing at least a first portion of a coolant in a cooling system from a first heat exchanger to a second heat exchanger to receive heat from a hot side of a thermoelectric cooling device; cooling one or more electronic devices using a cold side of the thermoelectric cooling device; and routing at least a second portion of the coolant in the cooling system from the first heat exchanger to an engine, wherein a coolant outlet of the second heat exchanger is coupled to a coolant inlet of the engine, and wherein the first portion of the coolant is the same portion of the coolant as the second portion of the coolant.

Efficiency, size, cost, reliability, or any combination thereof, of a vehicle may be improved by using a single cooling system to cool two or more heat sources that have different operating temperatures. For example, a single cooling system may be used to cool an engine and one or more electronic components. The electronic components may be at a significantly lower operating temperature than the engine. Further, in a particular embodiment, a coolant used to cool the engine is hotter than the operating temperature of the electronic components. However, use of a thermoelectric cooling device, such as a solid-state Peltier heat pump, enables driving heat against a temperature gradient to enable removal of heat from the electronic devices by the higher temperature coolant. Additionally, the thermoelectric cooling device enables control of the temperature of the electronic components by controlling power supplied to the thermoelectric cooling device. Further, a thermoelectric generator may be used to convert some of the waste heat from the electronic components and the engine as power that can be supplied to the thermoelectric cooling device.

### BRIEF DESCRIPTION OF THE DRAWINGS

FIG. 1 is a diagram of a first arrangement of a system to generate electric power;
FIG. 2 is a diagram of a second arrangement of a system to generate electric power;
FIG. 3 is a diagram of a third arrangement of a system to generate electric power;
FIG. 4-6 are views of a thermoelectric generator according to a particular arrangement;
FIG. 7 is a flow chart of a first arrangement of a method of generating electric power;
FIG. 8 is a flow chart of a control scheme to control generation of electric power according to a particular arrangement;
FIG. 9 is a diagram illustrating control of a system to generate electric power according to a particular arrangement;
FIG. 10 is a diagram of a first embodiment of a cooling system;
FIG. 11 is a diagram of a second embodiment of a cooling system;
FIG. 12 is a diagram of a cooling system; and
FIG. 13 is a flow chart of a particular embodiment of a method of using a cooling system.

### DETAILED DESCRIPTION

The features, functions, and advantages that are described can be achieved independently in various embodiments disclosed herein or may be combined in yet other embodiments further details of which can be shown with reference to the following description and drawings.

Operational efficiency of a cogeneration system may be improved by placing a thermoelectric generator between a relatively hot exhaust stream from a fuel cell and a relatively cold intake stream to the fuel cell. This arrangement enables the thermoelectric generator to generate electric power based on the relatively large temperature differential between the hot exhaust stream and the cold intake stream without using an additional cooling system. Additionally, this arrangement enables preheating of the cold intake stream before it is provided to the fuel cell. The efficiency of the thermoelectric generator may be increased due to the high magnitude of the temperature differential between the fuel cell exhaust stream and the fuel cell intake stream. Further, this arrangement does not require use of additional fuel to generate the temperature differential used by the thermoelectric generator to produce power; rather, waste heat in the fuel cell exhaust stream is used by the thermoelectric generator to produce power. Additionally, the weight of the cogeneration system is reduced with respect to other cogeneration systems since a separate cooling system is eliminated.

In a particular arrangement, a platform using the disclosed cogeneration system does not need an additional cooling system to cool exhaust from the fuel cell. Further, additional power is generated by the thermoelectric generator using what would otherwise be waste heat from the fuel cell. Thus, part of the power is recovered from the waste heat leading to improved efficiency of conversion of the fuel into electric power by the cogeneration system.

Additionally, efficiency, size, cost, reliability, or any combination thereof, of a vehicle may be improved by using a single cooling system to cool two or more heat sources that have different operating temperatures. For example, a single cooling system may be used to cool an engine and one or more electronic components. The electronic components may be at a significantly lower operating temperature than the engine. Further, in a particular arrangement, a coolant used to cool the engine is hotter than the operating temperature of the electronic components. However, use of a thermoelectric cooling device, such as a solid-state Peltier heat pump enables driving heat against a temperature gradient to enable removal of heat from the electronic devices by the higher temperature coolant. Additionally, the thermoelectric cooling device enables control of the temperature of the electronic components by controlling power supplied to the thermoelectric cooling device. Further, a thermoelectric generator may be used to convert some of the waste heat from the electronic components and the engine as power that can be supplied to the thermoelectric cooling device. Accordingly, separate cooling systems are not needed to cool the engine and the electronic components, which can reduce cost, size, weight and complexity of systems to cool the engine and the electronic components. Additionally, reliability of the system may be improved due to the reduced part count and simplicity of the "dual use" cooling system as compared to using separate cooling systems.

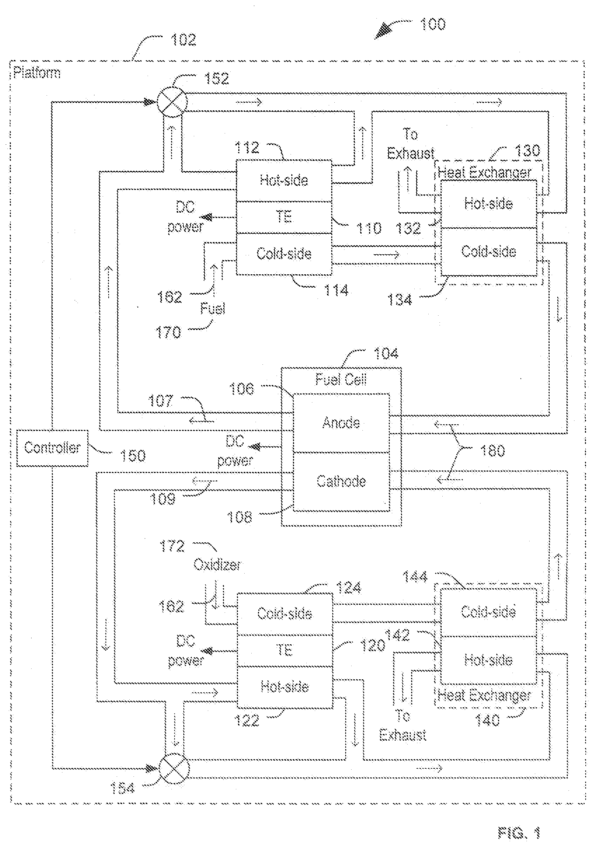

FIG. 1 is a diagram of a first arrangement of a system to generate electric power, the system generally designated 100. The system 100 includes a platform where a power generation system is situated. For example, the platform can be a mobile platform, such as an aircraft, a space craft, a watercraft, or a land-based vehicle. In another example, the platform can be a stationary platform, such as a power generation system in a utility power plant, an industrial site, an office building, or another substantially stationary structure. In a particular arrangement, the power generation system of the platform 102 includes components to generate electric power. For example the components to generate electric power may include a fuel cell 104 having an anode 106 and a cathode 108. The components to generate electric power may also include one or more thermoelectric generators (TE), such as a first TE 110 and a second TE 120.

In a particular arrangement, the first TE 110 is coupled to the anode 106 of the fuel cell 104, and the second TE 120 is coupled to the cathode 108 of the fuel cell 104. This arrangement may enable hot exhaust gas 107 from the anode 106 to be routed to a hot side 112 of the first TE 110. Likewise, hot exhaust gas 109 from the cathode 108 may be routed to a hot side 122 of the second TE 120. Intake gases 162 (such as, fuel 170 and oxidizer 172) that are cool by comparison to the hot exhaust gases 107, 109 may be received at inlets (e.g., from respective fuel and oxidizer storage systems) and routed through respective cold sides 114, 124 of the TEs 110, 120. In this arrangement, the TEs 110, 120 may be at or near a point of maximum temperature differential between the hot exhaust gases 107, 109 and the intake gases 162. In an illustrative arrangement, the fuel cell 104 is a high temperature fuel cell, such as a solid oxide fuel cell (SOFC). With a SOFC, the hot exhaust gases 107, 109 may have a temperature greater than 600°C. For example, the hot exhaust gases 107, 109 may have a temperature between about 600°C and about 800°C. A temperature of the intake gases 162 may depend on, among other things, the operating environment of the system 100. For example, when ambient air is used as the oxidizer 172, the temperature of the ambient air may be less than about 50°C. When the power generation system of the platform 102 is operated by or near humans, the ambient air may typically be between about - 50°C and 50°C. For purposes of a particular implementation, the intake gases 162 may be assumed to be approximately 20°C. It is understood that the temperature of the hot exhaust gases 107, 109 and the temperature of the intake gases 162 may vary widely depending on the particular arrangement, a particular application or use of the system 100 and specific operating conditions. Accordingly, the temperatures described above are exemplary and not intended to as limitations.

The system 100 may also include a first heat exchanger 130 coupled to the anode 106 and a second heat exchanger 140 coupled to the cathode 108. In a particular arrangement, exhaust gases from the hot sides 112, 122 of the TEs 110, 120 may be routed to respective inlets of hot sides 132, 142 of the heat exchangers 130, 140. Exhaust from the cold sides 114, 124 of the TEs 110, 120 may be routed to respective inlets of cold sides 134, 144 of the heat exchangers 130, 140. In this arrangement, the heat exchangers 130, 140 may preheat the intake gases 162 before the intake gases 162 are provided to the fuel cell 104 as preheated intake gas 180. Preheating the intake gas 180 may enable efficient operation of the fuel cell 104, especially when the fuel cell 104 is a high temperature fuel cell. In a particular arrangement, the heat exchangers 130, 140 are counter-flow heat exchangers; however, in other arrangements the heat exchangers 130, 140 may have other physical arrangements.

In a particular arrangement, the system 100 may be operated to increase the operational efficiency of the fuel cell 104. Accordingly, a controller 150 may operate a first control valve 152, a second control valve 154, or both, to control a temperature of the preheated intake gas 180 provided to the fuel cell 104. In a particular arrangement, the control valves 152, 154 are between a fuel cell outlet and a heat exchanger hot-side inlet. The control valves 152, 154 are adjustable to control an inlet temperature of the preheated intake gas 180. For example, the controller 150 may operate the control valves 152, 154 to allow a portion of the hot exhaust gases 107, 109 to bypass the TEs 110, 120 in order to increase the temperature of the preheated intake gas 180. When the control valves 152, 154 are opened (such that at least a portion of the hot exhaust gases 107, 109 bypass the TEs 110, 120, the temperature of the gas provided to the respective hot sides 132, 142 of the heat exchangers 130, 140 is increased, which increases the temperature of the preheated intake gas 180 exiting the respective cold sides 134, 144 of the heat exchangers 130, 140. Thus, an amount of preheating of the preheated intake gas 180 may be controlled by the controller 150 through operation of the control valves 152, 154. In a particular arrangement, the controller 150 operates the first control valve 152 to achieve and/or maintain a predetermined temperature of the preheated intake gas 180. For example, the predetermined temperature of the preheated intake gas 180 may be a temperature selected to optimize power generation by the fuel cell 104. Thus, the TEs 110, 120 may generate power using waste heat from the fuel cell 104. That is, in a particular arrangement, the fuel cell 104 may be operated as though it were a stand alone fuel cell, and the TEs 110, 120 may recover waste heat produced by the fuel cell 104 to generate additional electric power. In an illustrative arrangement, the predetermined temperature of the preheated intake gas 180 may be about 600°C. Thus, power generated by the fuel cell 104 may be increased and, when needed, cogeneration power provided by the TEs 110, 120 may be decreased to provide additional preheating of the preheated intake gas 180 to enable operation of the fuel cell 104 or to improve operational efficiency of the fuel cell 104. In another particular arrangement, the controller 150 operates the control valves 152, 154 to maximize, optimize or otherwise control total power output generated by the combination of the fuel cell 104 and the TEs 110, 120. For example, the controller 150 may monitor power output from the TEs 110, 120 and may adjust the control valves 152, 154 to maximize, optimize or otherwise control the power output based on a control scheme.

In a particular arrangement, one or more components of the system 100 may be merged with another component or may be omitted from the system 100. For example, only one TE may be present, only one control valve may be present, only one heat exchange may be present, or any combination thereof.

In another particular arrangement, waste heat may be recovered only from the hot exhaust gas 107 from the anode 106 or only from the hot exhaust gas 109 from the cathode 108. In this arrangement, only one set of heat recovery systems (such as the TEs 110, 120 and heat exchangers 130, 140), cogeneration systems (such as the TEs 110, 120), and control systems (such as the control valves 152, 154), may be present.

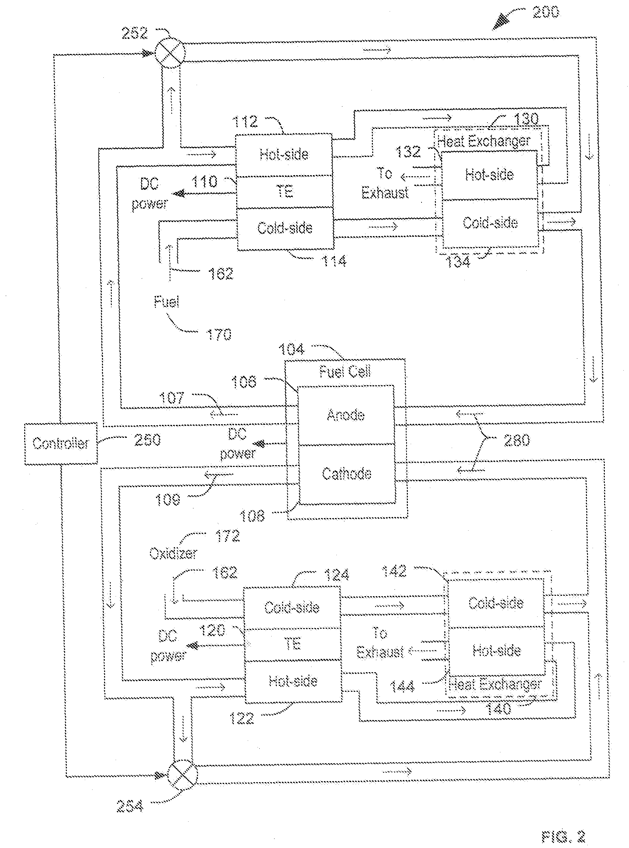

FIG. 2 is a diagram of a second arrangement of a system to generate electric power, the system generally designated 200. In a particular arrangement, the system 200 includes many elements that are the same as or substantially similar to elements of the system 100. Such elements have the same reference number as in FIG. 1 for ease of reference and description.

In the system 200, a controller 250 controls one or more control valves 252, 254. The control valves 252, 254 are positioned between a fuel cell outlet and a fuel cell inlet (rather than between the fuel cell outlet and the heat exchanger hot-side inlet as in the system 100 of FIG. 1). Thus, the control valves 252, 254 control an amount of the hot exhaust gases 107, 109 that bypass both the TEs 110, 120 and the heat exchanger 130, 140. The control valves 252, 254 are operable to control preheating of preheated intake gas 280 routed to the fuel cell by controlling a portion of the hot exhaust gases 107, 109 that is mixed directly into the preheated intake gas 280. For example, a first portion of the hot exhaust gases 107, 109 may be routed to an intake of the fuel cell 104 and a second portion of the hot exhaust gases 107, 109 may be routed through the TEs 110, 120 and the heat exchanger 130, 140 based on a position of the control valves 252, 254.

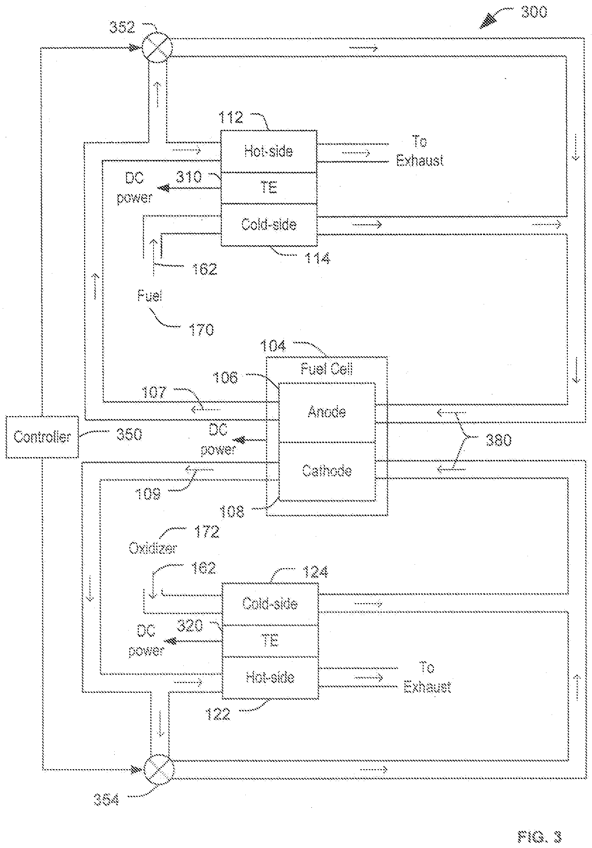

FIG. 3 is a diagram of a third arrangement of a system to generate electric power, the system generally designated 300. In a particular arrangement, the system 300 includes many elements that are the same as or substantially similar to elements of the system 100. Such elements have the same reference number as in FIG. 1 for ease of reference and description.

In the particular arrangement of FIG. 3, no heat exchangers, such as the heat exchangers 130 and 140 of FIGS 1 and 2, are present. Rather, TEs 310, 320 coupled to outlets of the fuel cell 104 exchange heat between the hot exhaust gases 107, 109 and the intake gases 162 in addition to generating power based on a temperature differential between the hot exhaust gases 107, 109 and the intake gases 162. A controller 350 controls one or more control valves 352, 354 that are positioned between the fuel cell outlet and the fuel cell inlet. Thus, the control valves 352, 354 control an amount of the hot exhaust gases 107, 109 that bypass TEs 310, 320. The control valves 352, 354 are operable to control preheating of preheated intake gas 380 routed to the fuel cell 104 by controlling a portion of the hot exhaust gases 107, 109 that is mixed directly into the preheated intake gas 380 from the cold sides 114, 124 of the TEs 310, 320.

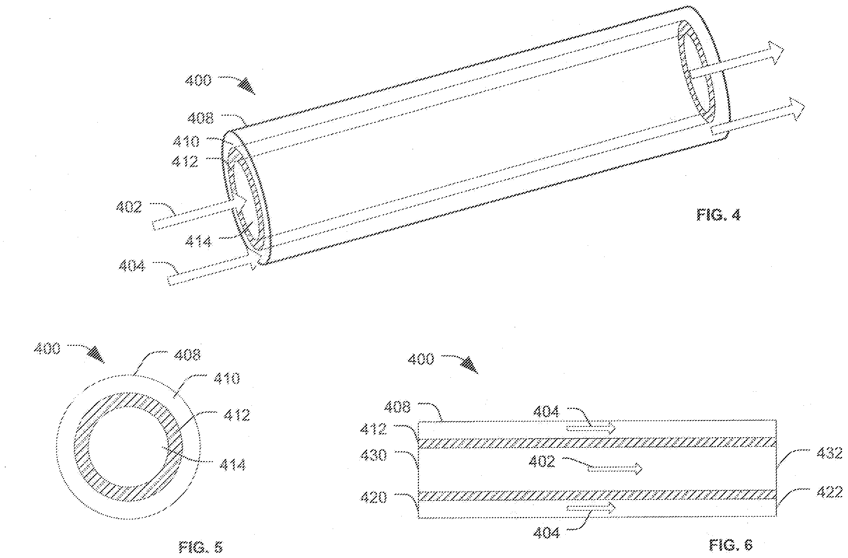

FIGS. 4-6 are perspective end and side views, respectively, of a thermoelectric generator (TE) 400 according to a particular arrangement. The TE 400 may be any one or more of the TEs 110, 120 described with reference to FIGS. 1 and 2. The TE 400 a thermoelectric device 412 generates electricity based on a temperature differential between the hot side 414 of the thermoelectric device 412 and the cold side 410 of the thermoelectric device 412. In a particular arrangement, the hot side 414 has a hot-side inlet 430 and a hot side outlet 432. The hot side 414 may be adapted to receive hot fluids 402, such as the hot exhaust gases 107, 109 from a high temperature fuel cell, as described with reference to FIGS. 1 and 2. The cold side 410 may have a cold-side inlet 420 and a cold-side outlet 422. The cold side 410 may be adapted to receive cold fluids 404, such as the intake gases 162, as described with reference to FIGS. 1 and 2. It is understood that "hot" and "cold" are relative terms and, as used herein, indicate a temperature differential between the respective fluids 402, 404. That is, the hot fluid 402 has a higher temperature than the cold fluid 404.

The hot side 414 is separated from the cold side 410 by the thermoelectric device 412. The thermoelectric device 412 may include bimetal junctions, bismuthtelluride semiconductor junctions, other materials capable of generating electric energy based on temperature differentials, or any combination thereof. In the illustrated arrangement, the TE 400 is radial or annular, with the cold side 410 surrounding the hot side 414. That is, a region of the TE 400 that receives hot fluids (the hot side 402) may be at a center of a tube and may be separated from an outer region of the TE 400 that receives cold fluids (the cold side 404) by the thermoelectric device 412. In this arrangement, an outer casing 408 may be provided around the cold side 410. However, in other arrangements the TE 400 may have a physical arrangement other than annular, such as parallel plates. Also, the illustrated arrangement is arranged for co-flow, or flow of the hot fluid 402 in the same direction as the cold fluid 404. However, in other arrangements, the TE 400 is counter flow, with the hot fluid 402 flowing in a direction opposite the cold fluid 404. The TE 400 may also have power connectors (not shown) to enable electricity generated by the TE 400 to flow to a circuit.

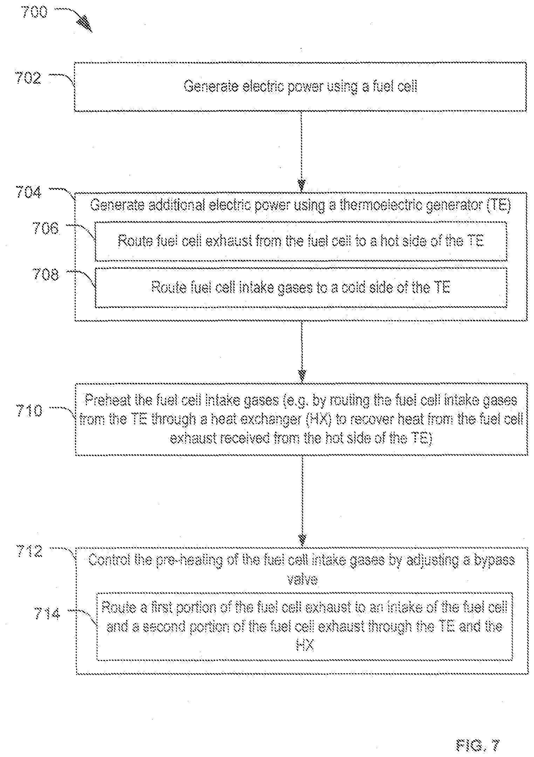

FIG. 7 is a flow chart of a first arrangement of a method of generating electric power, the method generally designated 700. The method 700 may include, at 702, generating electric power using a fuel cell. For example, the fuel cell 104 discussed with references to FIGS. 1 and 2 may generate electric current using a chemical reaction between a fuel and an oxidizer. In a particular arrangement, the fuel cell may be a high temperature fuel cell, such as a solid oxide fuel cell.

The method 700 may also include, at 704, generating additional electric power using a thermoelectric generator (TE). The TE may generate the additional electric power based on a temperature differential across a thermoelectric device. For example, the thermoelectric device 412 described with reference to FIGS. 4-6 may be used to generate the additional electric power based on a temperature differential between a cold side of the TE and a hot side of the TE. In a particular arrangement, the method 700 includes, at 706, routing fuel cell exhaust from the fuel cell to the hot side of the TE and, at 708, routing fuel cell intake gases to the cold side of the TE. Thus, a temperature differential between the fuel cell exhaust and the fuel cell intake gases may be used to generate the additional electric power at the TE.

In a particular arrangement, operation of the fuel cell may be enabled or operational efficiency of the fuel cell may be improved when the fuel cell intake gases are preheated. In this arrangement, the method also includes, at 710, preheating the fuel cell intake gases by routing the fuel cell intake gases from the TE through a heat exchanger (HX) to recover heat from the fuel cell exhaust received from the hot side of the TE. The method may also include, at 712, controlling preheating of the fuel cell intake gases by adjusting a bypass valve. For example, a first portion of the fuel cell exhaust may be routed to an intake of the fuel cell and a second portion of the fuel cell exhaust may be routed through the TE and the HX, at 714, based on a position of the bypass valve.

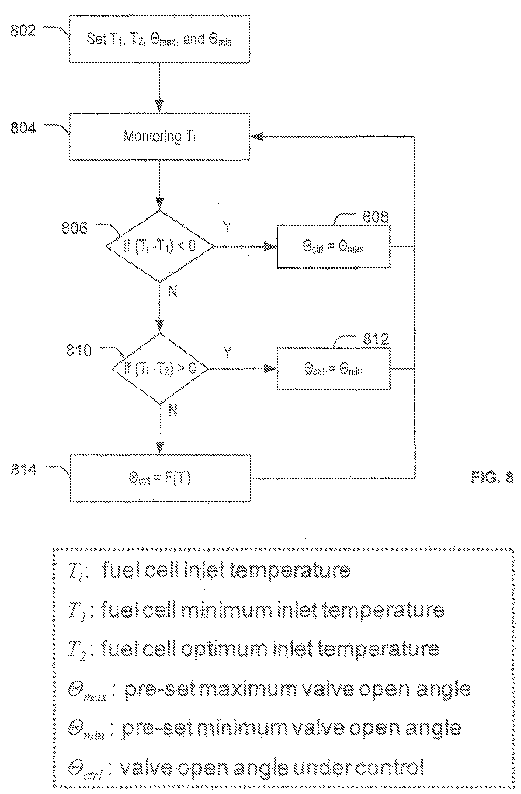

FIG. 8 is a flow chart of a control scheme to control generation of electric power according to a particular arrangement. For example, the control scheme illustrates control laws that may be used by a controller to manipulate control valves to regulate power generated by a cogeneration system, such as the system 100 or the system 200 as described with reference to FIG. 1 and FIG. 2, respectively. The control scheme includes, at 802, setting control parameters of the controller. The input parameters may include a fuel cell minimum inlet temperature, T₁, and a fuel cell optimum (or desired) inlet temperature, T₂. In a particular arrangement, T₂ may be selected to increase an amount of electric power output by the fuel cell. For example, when the fuel cell is a high-temperature fuel cell, T₂ may be a relatively high temperature, e.g., in the hundreds of degrees Celsius, to improve operational efficiency of the fuel cell. T₁ may be selected based on operational criteria of the fuel cell. For example, the fuel cell may generate minimal power or no power until a minimum operational temperature of the fuel cell is reached. T₁ may be selected to keep the fuel cell above this minimum operational temperature.

The input parameters may also include valve open angles, such as a minimum valve open angle, Θₘᵢₙ, and a maximum valve open angle, Θₘₐₓ. The minimum valve open angle Θₘᵢₙ may be a minimum amount that a control valve, such as one of the control valves 152, 154 of FIG. 1 or 252, 254 of FIG. 2, can be opened. The maximum valve open angle Θₘₐₓ may be a maximum amount that the control valve can be opened.

At 804, the controller may monitor an inlet temperature, Tᵢ, of the fuel cell. For example, a thermocouple or other temperature monitoring device may detect, in real-time or near real-time, the temperature of the intake gases 180 of FIG. 1 or the temperature of the intake gases 280 of FIG. 2. Based on Tᵢ, the controller may adjust an open angle Θ_{ctrl}, the control variable, of the control valve. For example, at 806, when Tᵢ minus T₁ is less than 0 (zero), the controller may adjust the valve open angle Θ_{ctrl} to be equal to the maximum valve open angle Θₘₐₓ, at 808, to maximize preheating of the fuel cell inlet gases. At 810, when Tᵢ minus T₂ is greater than 0 (zero), the controller may adjust the valve open angle Θ_{ctrl} to be equal to the minimum valve open angle Θₘᵢₙ, at 812, to minimize preheating of the fuel cell inlet gases. When Tᵢ minus T₁ is not less than 0 (zero) and Tᵢ minus T₂ is not greater than 0 (zero), the controller may implement a control function, F(Tᵢ), to select the valve open angle Θ_{ctrl}. For example, the control function may be a proportional control function, a derivative control function, an integral control function, another control function, or any combination thereof.

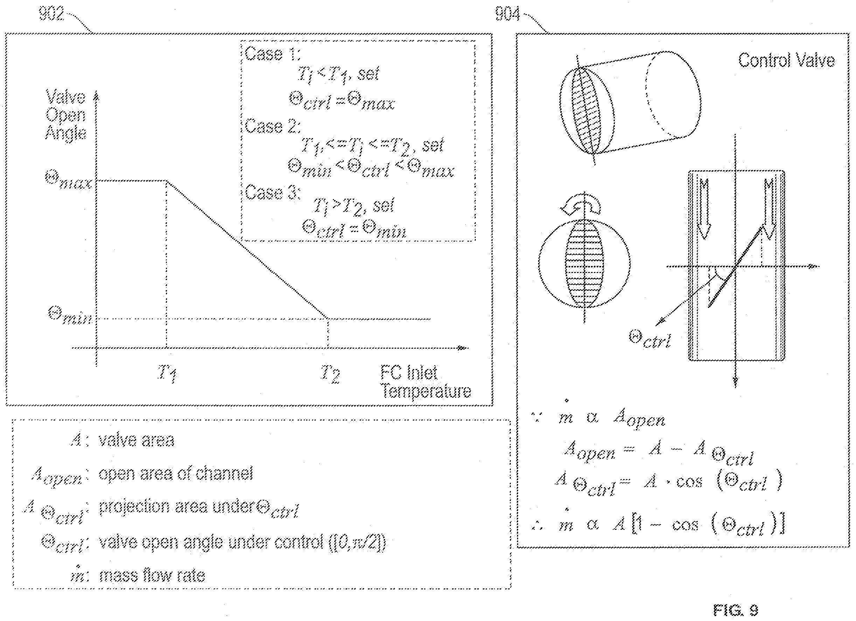

FIG. 9 is a diagram further illustrating the control scheme of FIG. 8, according to a particular arrangement. FIG. 9 includes a graph 902 of the valve open angle versus the fuel cell inlet temperature, Tᵢ, in one arrangement of the control scheme. The graph 902 shows that, when Tᵢ is less than T₁, the control valve is opened to a maximum value, Θₘₐₓ. Further, when Tᵢ is greater than T₂, the control valve is set to a minimum open angle (which may be closed), Θₘᵢₙ. When Tᵢ is between T₁ and T₂, the angle of the control valve is set according to a function that relates Tᵢ to the control value angle, Θ_{ctrl}. FIG. 9 also illustrates, at 904, the control valve and the control valve angle Θ_{ctrl} and describes a relationship between mass flow rate of fluid through the control valve based on the control valve open angle Θ_{ctrl}.

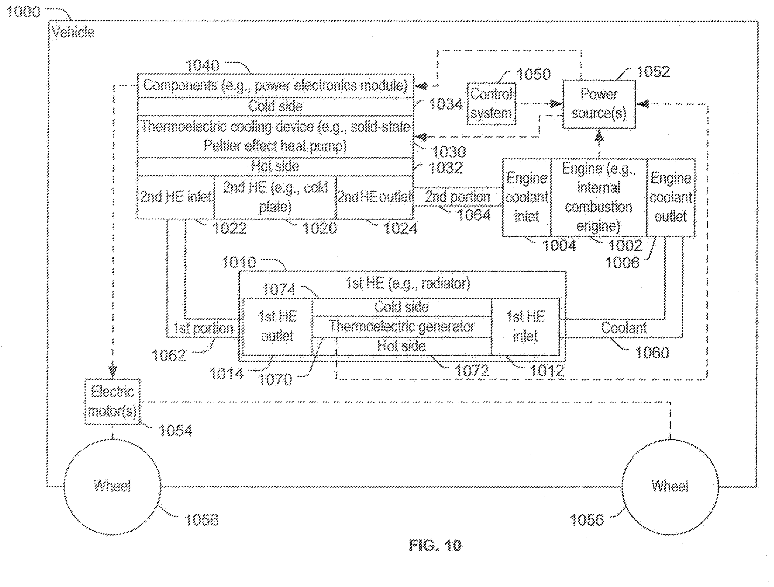

FIG. 10 is a diagram of a first embodiment of a cooling system. The cooling system is disposed in a vehicle 1000 that includes an engine 1002 and one or more propulsion devices, such as wheels 1056, fans, propellers, rotors, tracks, other devices adapted to generate or control movement of the vehicle 1000, or any combination thereof. For example, the engine 1002 may be an internal combustion engine, such as a gasoline or diesel engine or another type of piston or rotary engine, or a turbine engine or other continuous combustion engine. During operation, the engine 1002 may generate heat that should be removed from the engine 1002 in order to maintain the engine 1002 at a temperature within a specified operating temperature range. Thus, the vehicle 1000 may include a cooling system to extract heat from the engine 1002. For example, the engine 1002 may include an engine coolant inlet 1004 to receive a coolant 1060 (e.g., a second portion 1064 of the coolant 1060) into the engine 1002 and an engine coolant outlet 1006 to remove the coolant 1060 from the engine 1002. The cooling system may also be used to extract heat from one or more other components 1040 of the vehicle 1000.

The coolant 1060 may be routed to a first heat exchanger ("HE") 1010 to extract waste heat from the coolant 1060 (e.g., to reduce the temperature of the coolant 1060) so that the coolant 1060 can be cycled through the cooling system to remove additional heat from the engine 1002 and the one or more other components 1040 of the vehicle 1000. In a particular embodiment, the coolant 1060 is supplied to the engine 1002 and to a second HE 1020, such as a cold plate. For example, a first portion 1062 of the coolant 1060 may be routed to the second HE 1020 to provide cooling for the one or more components 1040 of the vehicle 1000, and a second portion 1064 of the coolant 1060 may be routed to the engine 1002 to provide cooling for the engine 1002.

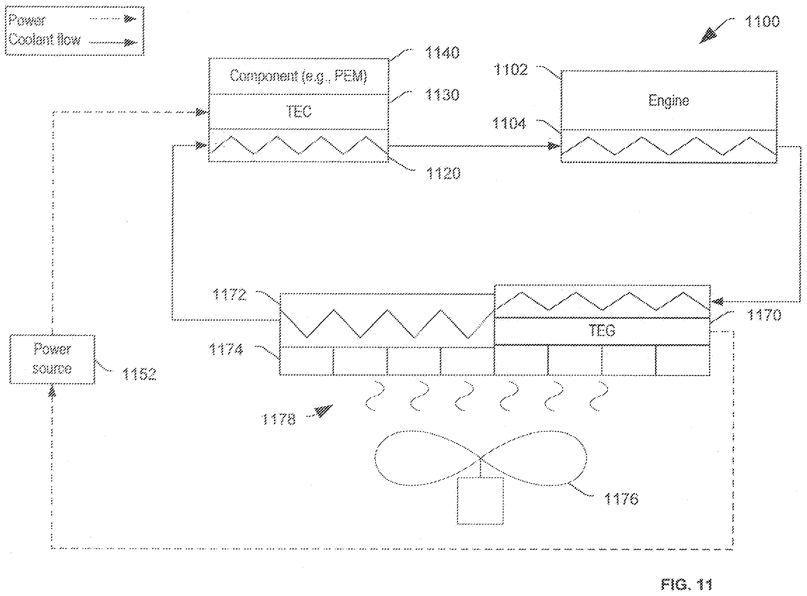

According to the invention, the first portion 1062 is the same portion of the coolant as the second portion 1064. To illustrate, the second HE 1020 and the engine 1002 may be coupled via a conduit (e.g., pipe, tubing or ducts) to receive the coolant 1060 in series, as described with reference to FIG. 11. For example, the first portion 1062 may be routed to a second HE inlet 1022 from a first HE outlet 1014 of the first HE 1010. The first potion 1062 may pass through the second HE 1020 and exit from the second HE 1020 via a second HE outlet 1024. After the coolant 1060 exits the second HE outlet 1024, the coolant 1060 may be routed as the second portion 1064 to the engine coolant inlet 1004. Thus, the first portion 1062 of the coolant 1060 may be cooler than the second portion 1064 of the coolant 1060 since heat may be added to the coolant 1060 by the second HE 1020.

The vehicle 1000 may also include a thermoelectric cooling device 1030 to facilitate cooling of the one or more components 1040 of the vehicle 1000. For example, the thermoelectric cooling device 1030 may include a sold-state Peltier effect heat pump. A cold side 1034 of the thermoelectric cooling device 1030 may be in thermal communication with the one or more components 1040 of the vehicle 1000. Heat may be transferred to the thermoelectric cooling device 1030 from the one or more components 1040 of the vehicle 1000. The heat may pass from the cold side 1034 to a hot side 1032 of the thermoelectric cooling device 1030. The hot side 1032 of the thermoelectric cooling device 1030 may be in thermal communication with the second HE 1020. Thus, the second HE 1020 may receive heat from the hot side 1032 of the thermoelectric cooling device 1030. Heat may be extracted from the second HE 1020 by the coolant 1060. The first portion 1062 of the coolant 1060 may be at a temperature that is higher than a temperature of the one or more components 1040 of the vehicle 1000. For example, the temperature of the first portion 1062 of the coolant 1060 may be higher than a specified operating temperature of the one or more components 1040 of the vehicle 1000. However, the thermoelectric cooling device 1030 may drive heat against a temperature gradient to enable cooling of the one or more components 1040 by the thermoelectric cooling device 1030 and the second HE 1020.

A control system 1050 may be used to control the temperature of the one or more components 1040 by adjusting power supplied to the thermoelectric cooling device 1030. For example, a rate at which heat is extracted from the one or more components 1040 by the thermoelectric cooling device 1030 may depend at least partially on an amount of current supplied to the thermoelectric cooling device 1030. Thus, even when the first portion 1062 of the coolant 1060 is received at the second HE 1020 at a temperature that is greater than the specified operating temperature of the one or more components 1040, the thermoelectric cooling device 1030 may enable control of the temperature of the one or more components 1040 and efficient heat transfer from the one or more components 1040 to the coolant 1060.

In a particular embodiment, the vehicle 1000 also includes a thermoelectric generator 1070 in thermal communication with the first HE 1010. The thermoelectric generator 1070 may generate at least a portion of power used by the thermoelectric cooling device 1030 using waste heat sent to the first HE 1010 via the coolant 1060 for disposition (e.g., removal from the coolant). For example, the thermoelectric generator 1070 may be located between a hot side 1072 and a cold side 1074 of the first HE 1010. The thermoelectric generator 1070 may generate power based on a temperature differential between the hot side 1072 and the cold side 1074 of the first HE 1010. In a particular embodiment, the thermoelectric generator 1070 and the thermoelectric cooling device 1030 are each Peltier effect devices. For example, the thermoelectric cooling device 1030, the thermoelectric generator 1070, or both may be thermoelectric generators such as the TEs described with reference to FIGS. 1-6.

In a particular embodiment, the vehicle 1000 includes one or more electric motors 1054. For example, the vehicle 1000 may be a "hybrid vehicle" where the engine 1002 is used at least partially to generate power that is used by the one or more electric motors 1054 to move the vehicle 1000. For example, the engine 1002 may charge one or more batteries or other power sources 1052 that supply power to the electric motors 1054 to turn the wheels 1056. The thermoelectric generator 1070 may also be coupled to one or more of the power sources 1052 to provide a portion of the power used by the thermoelectric cooling device 1030 to cool the one or more components 1040 of the vehicle 1000. The one or more components 1040 of the vehicle 1000 that are cooled using the second HE 1020 and the thermoelectric cooling device 1030 may include components of a power conditioning system (such as a power electronics module) that conditions power supplied to the one or more electric motors 1054. Such components may include inverters, transformers and other relatively high temperature, high power electronic components.

In a particular embodiment, the vehicle 1000 is a land-based vehicle, such as a car. In other particular embodiments, the vehicle 1000 is a water-based vehicle, such as a boat, a ship or a submarine. In still other embodiments, the vehicle 1000 may be an aircraft, such as an airplane or a helicopter. In yet other embodiments, the vehicle 1000 is a spacecraft, such as a satellite or orbital vehicle. Regardless of the specific type of the vehicle 1000, the cooling system may reduce an overall weight of the vehicle 1000 and a complexity or part count of the vehicle 1000 by cooling both the engine 1002 and the one or more other components 1040 of the vehicle 1000 using a single cooling system despite a large operating temperature difference between the engine 1002 and the one or more other components 1040. Additionally, since an operating efficiency of the one or more components 1040 may decrease as the temperature of the one or more components 1040 increases, the cooling system may improve the operating efficiency of the one or more components 1040 and potentially of the vehicle 1000 as whole. This may be so even though the thermoelectric cooling device 1030 uses power to facilitate the transfer of heat from the one or more components 1040 to the second HE 1020 because the thermoelectric cooling device 1030 also increases a temperature differential between the one or more components 1040 and the cold side 1034 of the thermoelectric cooling device 1030. Still further efficiency improvements may be gained when the thermoelectric generator 1070 is used to convert a portion of the waste heat to power.

FIG. 11 is a diagram of a second embodiment of a cooling system 1100. The cooling system 1100 is arranged to cool two or more heat sources, such as an engine 1102 and one or more components 1140. For example, the cooling system may be part of the vehicle 1000 of FIG. 10. In the embodiment illustrated in FIG. 11, the cooling system 1100 routes a coolant flow from a first heat exchanger ("HE") 1172 to a second HE 1120 that is in thermal communication with the component 1140, from the second HE 1120 to an engine cooling system 1104 and from the engine cooling system 1104 back to the first HE 1172. Thus, the second HE 1120 and the engine cooling system 1104 are connected in series in the cooling system 1100.

In a particular embodiment, the engine 1102 includes or is in thermal communication with the engine cooling system 1104 to receive waste heat generated at the engine 1102. For example, the engine cooling system 1104 may receive the coolant at a first temperature and release the coolant at a second temperature. The second temperature may be higher than the first temperature due to heat extracted from the engine 1102 by the coolant. For example, the second temperature may be higher than the first temperature by 20°C to 30°C or more.

The first HE 1172 may include a radiator or a similar device to extract heat from the coolant. For example, the first HE 1172 may include ribs, fins, or other devices that provide a large surface area for heat exchange with an air stream 1178 from a cooling fan 1176 to remove heat from the coolant. In another example, the first HE 1172 may include devices that enable removal of waste heat from the coolant into another coolant stream, removal of the waste heat via radiation, or removal of waste heat via another heat transfer process. Thus, the coolant may be received at the first HE 1172 at a relatively high temperature and may exit from the first HE 1172 at a cooler temperature.

In a particular embodiment, the component 1140 includes one or more electronic devices, such as a power electronics module. The engine 1102 and the component 1140 may have different specified operating temperatures. For example, the engine 1102 may operate at a significantly higher temperature than the component 1140. To illustrate, certain components of the engine 1102 that are cooled by the coolant may operate at temperatures significantly higher than 100°C (e.g., more than 500°C). However, the component 1140 may operate at 100°C or less. In a particular embodiment, the component 1140 has a specified operating temperature of 60-90°C. In another particular embodiment, the component 1140 has a specified operating temperature of 90-100°C. The operating temperature of the engine 1102 may depend on the specific type of the engine and other characteristics of the engine 1102 and operating conditions of the engine 1102. For example, when the engine 1102 is a gasoline engine, the operating temperature may vary depending on the specific type of gasoline used by the engine 1102 and depending on manufacturer's specifications for the engine 1102. Likewise, operating temperatures can vary widely for other types of the engines, such as diesel and turbine engines. However, the specified operating temperature of the engine 1102 is generally significantly higher than 100°C.

Since the engine 1102 may have a significantly higher operating temperature than the component 1140, the coolant supplied to the second HE 1120 from the first HE 1172 may be too hot to enable sufficient cooling of the component 1140 based on a thermal gradient between the component 1140 and the coolant. A thermoelectric cooling device 1130 may be disposed between the second HE 1120 and the component 1140 to facilitate transfer of heat from the component 1140 to the coolant. The thermoelectric cooling device 1130 may include a Peltier heat pump that drives heat against a thermal gradient in response to a current supplied to the thermoelectric cooling device 1130. Thus, even when the coolant would not enable the second HE 1120 to extract sufficient heat from the component 1140 to maintain the specified operating temperature of the component 1140, the thermoelectric cooling device 1130 can facilitate the heat transfer and facilitate cooling of the component 1140.

The cooling system 1100 may also include a thermoelectric generator 1170 in thermal communication with the first HE 1172. The thermoelectric generator 1170 may generate power based on a temperature differential between the coolant received at the first HE 1172 from the engine 1102 and a cold side of the first HE 1172 (e.g., a portion of the first HE 1172 where heat is extracted by the air stream 1178). The thermoelectric generator 1170 may include a Peltier effect device that generates power based on a temperature differential. At least a portion of the power generated by the thermoelectric generator 1170 may be used to provide power to the thermoelectric cooling device 1130 to facilitate cooling of the component 1140. For example, the power generated by the thermoelectric generator 1170 may be combined with power from another power source 1152 (e.g., a battery) to power the thermoelectric cooling device 1130. The power provided to the thermoelectric cooling device 1130 may be controlled to control the temperature of the component 1140.

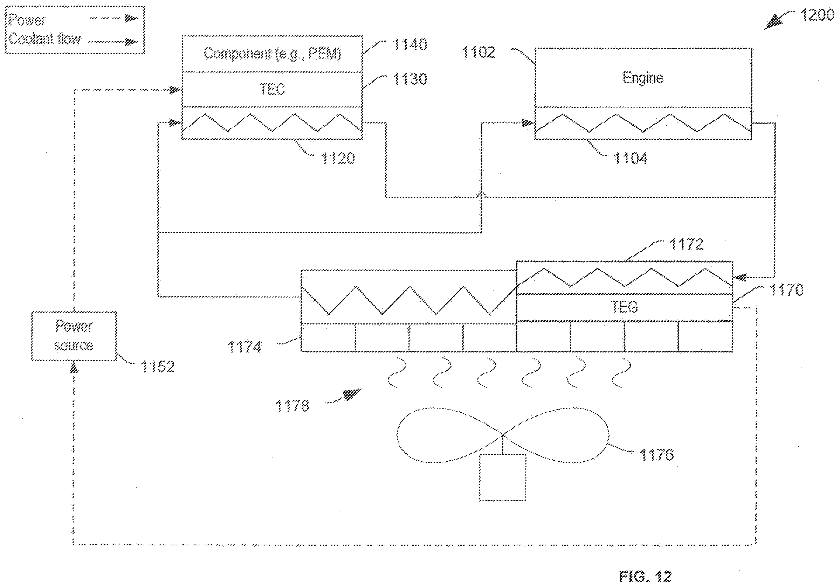

FIG. 12 is a diagram of a cooling system 1200. The cooling system 1200 is arranged to cool two or more heat sources, such as the engine 1102 and the component 1140. The cooling system 1200 routes a first portion of a coolant flow from the first HE 1172 to the second HE 1120 that is in thermal communication with the component 1140 and from the second HE 1120 back to the first HE 1172. A second portion of the coolant flow is routed from the first HE 1172 to the engine cooling system 1104 and from the engine cooling system 1104 back to the first HE 1172. Thus, the second HE 1120 and the engine cooling system 1104 are connected in parallel in the cooling system 1200.

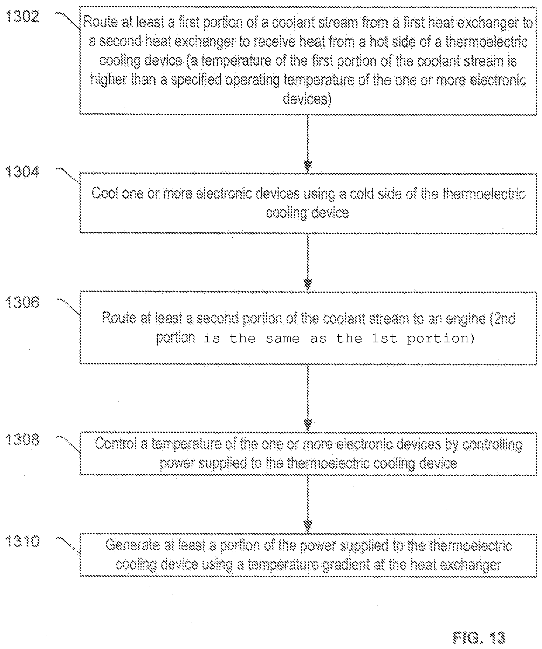

FIG. 13 is a flow chart of a particular embodiment a method of cooling an engine and another component. The method may be performed by the vehicle 1000 of FIG. 10 or by the cooling systems 1100 and 1200 of FIGS. 11 and 12, respectively.

The method includes, at 1302, routing at least a first portion of a coolant stream from a first heat exchanger to a second heat exchanger to receive heat from a hot side of a thermoelectric cooling device. For example, the thermoelectric cooling device may provide cooling for one or more electronic devices, such as a power electronics module. The temperature of the first portion of the coolant stream may be higher than a specified operating temperature of the one or more electronic devices.

The method also includes, at 1304, cooling the one or more electronic devices using a cold side of the thermoelectric cooling device. For example, the thermoelectric cooling device may include a solid-state Peltier effect heat pump. Thus, the cool side of the thermoelectric cooling device may receive heat from the one or more electronic devices and may transport the heat to a hot side of the thermoelectric cooling device. The hot side of the thermoelectric cooling device may be in thermal communication with the coolant stream. For example, the hot side of the thermoelectric cooling device may be in thermal contact with a second heat exchanger through which the first portion of the coolant stream is conveyed.

The method also includes, at 1306, routing at least a second portion of the coolant stream to an engine. According to the invention, the second portion of the coolant stream is the same as the first portion of the coolant stream. For example, the cold plate and the engine may be coupled in series to receive the coolant stream. To illustrate, the second heat exchanger and the engine may be coupled as described with reference to FIG. 11. Thus, the temperature of the first portion of the coolant stream when the first portion is received at the second heat exchanger may be less than a temperature of the second portion of the coolant stream when the second portion is received at the engine.

The method also includes, at 1308, controlling a temperature of the one or more electronic devices by controlling power supplied to the thermoelectric cooling device. For example, when the thermoelectric cooling device is a solid-state heat pump, the thermoelectric cooling device may drive heat from the cold side of the thermoelectric cooling device to the hot side of the thermoelectric cooling device. Thus, the heat may be received into the coolant stream based on power provided to the thermoelectric cooling device. To illustrate, when additional power is provided to the thermoelectric cooling device, the thermoelectric cooling device may extract more heat from the one or more electronic devices per unit of time, and when less power is provided to the thermoelectric cooling device, the thermoelectric cooling device may extract less heat from the one or more electronic devices per unit of time.

After receiving heat from the engine, the coolant stream may be routed to the first heat exchanger, such as the first HE 1010 of FIG. 10 for removal of the heat (i.e., waste heat from the engine 1002 and the components 1040). For example, the first heat exchanger may include a radiator. The first heat exchanger may remove heat from the coolant stream before routing the coolant stream back to second heat exchanger and to the engine. The method may include, at 1310, generating at least a portion of the power supplied to the thermoelectric cooling device using a temperature gradient at the first heat exchanger. For example, the first heat exchanger may include a thermoelectric generator. The thermoelectric generator may generate power based on the temperature differential between a hot side of the first heat exchanger and a cold side of the first heat exchanger. The power generated by the thermoelectric generator may be routed to a power storage device, such as a battery, or to the thermoelectric cooling device to cool the one or more electronic devices.

Multiple use cooling systems (i.e., systems used to cool more than one heat source) as disclosed herein may improve efficiency, cost, and reliability as compared to using separate cooling systems for two or more heat sources. Additionally, due to the reduced number of parts compared to separate cooling systems, the multiple use cooling systems may be lighter and take up less space.

These improvements may be especially beneficial when the multiple use cooling system is used in a vehicle to cool two or more heat sources that have different operating temperatures. For example, landcraft, watercraft, aircraft and spacecraft may each include heat sources with different cooling requirements, such as engines and electronic components. The electronic components may have a significantly lower operating temperature than the engines. In certain embodiments, a coolant used to cool the engine is hotter than the operating temperature of the electronic components. However, use of a thermoelectric cooling device, such as a solid-state Peltier heat pump enables driving heat against a temperature gradient to enable removal of heat from the electronic devices by the higher temperature coolant. Use of a higher temperature coolant to cool the electronic devices may improve thermal performance of a radiator or other heat exchanger that removes heat from the coolant. For example, in hot ambient temperature environments, there may be only a small temperature gradient between the operating temperature of the electronic devices and the ambient temperature. However, when a coolant that is at a higher temperature than the operating temperature of the electronic devices is used, as in embodiments disclosed herein, a larger temperature gradient is present between the coolant and the ambient temperature, which improves the efficiency of heat transfer from the coolant to the ambient environment.

Additionally, the thermoelectric cooling device enables control of the temperature of the electronic components by controlling power supplied to the thermoelectric cooling device. Controlling the temperature of the electronic components can reduce thermal stresses and improve reliability of the electronic components. Accordingly, the multiple use cooling systems disclosed can reduce cost, size, weight and complexity of cooling systems and improve reliability of the cooling systems and the systems being cooled (e.g., the engines and the electronic components).

Further, a thermoelectric generator may be used to convert some of the waste heat from the electronic components and the engine as power that can be supplied to the thermoelectric cooling device. The thermoelectric generator may also reduce a thermal load of the radiator by converting some of the waste heat received at the radiator to power, enabling improved performance of the cooling system.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be reduced. Accordingly, the disclosure and the figures are to be regarded as illustrative rather than restrictive.

The Abstract of the Disclosure is provided with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, claimed subject matter may be directed to less than all of the features of any of the disclosed embodiments.

The above-disclosed subject matter is to be considered illustrative, and not restrictive, and the appended claims are intended to cover all such modifications, enhancements, and other embodiments, which fall within the scope of the present disclosure. Thus, to the maximum extent allowed by law, the scope of the disclosure is to be determined by the broadest permissible interpretation of the following claims and their equivalents, and shall not be restricted or limited by the foregoing detailed description.

## Claims

1. A system (100), comprising:
an engine having an engine coolant inlet (1004) and an engine coolant outlet (1006);
a first heat exchanger (1010) having a first heat exchanger inlet and a first heat exchanger outlet (1014);
a second heat exchanger (1020) having a second heat exchanger inlet (1022) and a second heat exchanger outlet (1024), the second heat exchanger outlet (1024) coupled to the engine coolant inlet (1004);
a thermoelectric cooling device (1030) in thermal communication with the second heat exchanger (1020); and
one or more conduits to transport coolant (1060);
wherein a first portion (1062) of a coolant flow from the first heat exchanger outlet (1014) is routed to the second heat exchanger inlet (1022) to receive heat output from one or more devices in thermal communication with the thermoelectric cooling device (1030), and wherein a second portion (1064) of the coolant flow from the first heat exchanger outlet (1014) is routed to the engine coolant inlet (1004) to receive heat output by the engine, **characterised in that** the first portion (1062) of the coolant (1060) is the same portion of the coolant (1060) as the second portion (1064) of the coolant (1060).

2. The system of claim 1, further comprising a control system (1050) coupled to the thermoelectric cooling device (1030), wherein the control system (1050) adjusts power input to the thermoelectric cooling device (1030) to control a temperature of the one or more devices in thermal communication with the thermoelectric cooling device (1030).

3. The system of claim 1, wherein the engine (1002) includes an internal combustion engine.

4. The system of claim 1, wherein the first heat exchanger (1010) includes a radiator.

5. The system of claim 1, wherein a temperature of the one or more devices in thermal communication with the thermoelectric cooling device (1030) is less than a temperature of the first portion (1062) of the coolant (1060) flow.

6. The system of any of claims 1 to 5, further comprising a thermoelectric generator (1070) in thermal communication with the first heat exchanger (1010), wherein the thermoelectric generator (1070) generates power based on a temperature differential between the coolant (1060) received at the first heat exchanger inlet and a temperature of a cold side (1034) of the first heat exchanger (1010).

7. The system of claim 1, wherein the one or more devices in thermal communication with the thermoelectric cooling device (1030) include a power electronics module.

8. A vehicle (1000), comprising:
an engine (1002);
a thermoelectric cooling device (1030) to cool one or more components (1040) of the vehicle (1000);
a first heat exchanger (1010) to receive heat from a hot side (1032) of the thermoelectric cooling device (1030); and
a second heat exchanger (1020) to remove heat from a coolant (1060), wherein a second portion (1064) of the coolant (1060) is supplied from the second heat exchanger (1020) to the engine and a first portion (1062) of the coolant (1060) is supplied from the first heat exchanger (1010) to the second heat exchanger (1010),
**characterised in that** the first portion (1062) of the coolant (1060) is the same portion of the coolant (1060) as the second portion (1064) of the coolant (1060).

9. The vehicle (1000) of claim 8, further comprising a thermoelectric generator (1070) to generate at least a portion of power used by the thermoelectric cooling device (1030) based on a temperature differential at the second heat exchanger (1020).

10. The vehicle (1000) of claim 8 or 9, further comprising a control system (1050) to control a temperature of the one or more components (1040) by adjusting power supplied to the thermoelectric cooling device (1030).

11. The vehicle (1000) of any of claims 8 to 10, further comprising one or more electric motors (1054), wherein the engine (1002) generates at least a portion of power used by the one or more electric motors (1054) to move the vehicle (1000), and wherein the one or more components (1040) include a power conditioning system that conditions power supplied to the one or more electric motors.

12. The vehicle of claim 8, wherein the thermoelectric cooling device (1030) comprises a solid-state Peltier effect heat pump.

13. A method, comprising:
routing at least a first portion (1062) of a coolant (1060) in a cooling system from a first heat exchanger (1010) to a second heat exchanger (1020) to receive heat from a hot side (1032) of a thermoelectric cooling device (1030);
cooling one or more electronic devices using a cold side (1034) of the thermoelectric cooling device (1030); and
routing at least a second portion (1064) of the coolant (1060) in the cooling system from the first heat exchanger (1010) to an engine (1002),
wherein a coolant outlet (1024) of the second heat exchanger (1020) is coupled to a coolant inlet (1004) of the engine (1002), and wherein the first portion (1062) of the coolant (1060) is the same portion of the coolant (1060) as the second portion (1064) of the coolant (1060).

## Patentansprüche

1. System (100), umfassend:
einen Motor mit einem Motorkühlmitteleinlass (1004) und einem Motorkühlmittelauslass (1006);
einen ersten Wärmetauscher (1010) mit einem ersten Wärmetauschereinlass und einem ersten Wärmetauscherauslass (1014);
einen zweiten Wärmetauscher (1020) mit einem zweiten Wärmetauschereinlass (1022) und einem zweiten Wärmetauscherauslass (1024), wobei der zweite Wärmetauscherauslass (1024) mit dem Motorkühlmitteleinlass (1004) gekoppelt ist;
eine thermoelektrische Kühlvorrichtung (1030) in thermischer Verbindung mit dem zweiten Wärmetauscher (1020); und
eine oder mehrere Leitungen zum Transport von Kühlmittel (1060);
wobei ein erster Teil (1062) eines Kühlmittelstroms vom ersten Wärmetauscherauslass (1014) zum zweiten Wärmetauschereinlass (1022) geführt ist, um von einer oder mehreren Vorrichtungen in thermischer Verbindung mit der thermoelektrischen Kühlvorrichtung (1030) abgegebene Wärme aufzunehmen, und wobei ein zweiter Teil (1064) des Kühlmittelstroms vom ersten Wärmetauscherauslass (1014) zum Motorkühlmitteleinlass (1004) geführt ist, um vom Motor abgegebene Wärme aufzunehmen,
**dadurch gekennzeichnet, dass** der erste Teil (1062) des Kühlmittels (1060) der gleiche Teil des Kühlmittels (1060) ist wie der zweite Teil (1064) des Kühlmittels (1060).

2. System nach Anspruch 1, ferner mit einem Steuersystem (1050), das mit der thermoelektrischen Kühlvorrichtung (1030) gekoppelt ist, wobei das Steuersystem (1050) die Leistungsaufnahme der thermoelektrischen Kühlvorrichtung (1030) anpasst, um eine Temperatur der in thermischer Verbindung mit der thermoelektrischen Kühlvorrichtung (1030) stehenden einen oder mehreren Vorrichtungen zu steuern.

3. System nach Anspruch 1, bei dem der Motor (1002) einen Verbrennungsmotor beinhaltet.

4. System nach Anspruch 1, bei dem der erste Wärmetauscher (1010) einen Kühler beinhaltet.

5. System nach Anspruch 1, bei dem eine Temperatur der in thermischer Verbindung mit der thermoelektrischen Kühlvorrichtung (1030) stehenden einen oder mehreren Vorrichtungen niedriger ist als eine Temperatur des ersten Teils (1062) des Kühlmittelstroms (1060).

6. System nach einem der Ansprüche 1 bis 5, ferner umfassend einen in thermischer Verbindung mit dem ersten Wärmetauscher (1010) stehenden thermoelektrischen Generator (1070), wobei der thermoelektrische Generator (1070) Strom basierend auf einer Temperaturdifferenz zwischen dem am ersten Wärmetauschereinlass aufgenommenen Kühlmittel (1060) und einer Temperatur einer kalten Seite (1034) des ersten Wärmetauschers (1010) erzeugt.

7. System nach Anspruch 1, bei dem die in thermischer Verbindung mit der thermoelektrischen Kühlvorrichtung (1030) stehenden ein oder mehreren Vorrichtungen ein Leistungselektronikmodul beinhalten.

8. Fahrzeug (1000), umfassend:
einen Motor (1002);
eine thermoelektrische Kühlvorrichtung (1030) zum Kühlen einer oder mehrerer Komponenten (1040) des Fahrzeugs (1000);
einen ersten Wärmetauscher (1010) zum Empfangen von Wärme von einer heißen Seite (1032) der thermoelektrischen Kühlvorrichtung (1030); und
einen zweiten Wärmetauscher (1020) zum Abführen von Wärme aus einem Kühlmittel (1060), wobei ein zweiter Teil (1064) des Kühlmittels (1060) vom zweiten Wärmetauscher (1020) dem Motor zugeführt wird und ein erster Teil (1062) des Kühlmittels (1060) von dem ersten Wärmetauscher (1010) dem zweiten Wärmetauscher (1010) zugeführt wird,
**dadurch gekennzeichnet, dass**
der erste Teil (1062) des Kühlmittels (1060) derselbe Teil des Kühlmittels (1060) ist wie der zweite Teil (1064) des Kühlmittels (1060).

9. Fahrzeug (1000) nach Anspruch 8, ferner mit einem thermoelektrischen Generator (1070) zum Erzeugen mindestens eines Teils der von der thermoelektrischen Kühlvorrichtung (1030) verbrauchten Leistung basierend auf einer Temperaturdifferenz am zweiten Wärmetauscher (1020).

10. Fahrzeug (1000) nach Anspruch 8 oder 9, ferner mit einem Steuersystem (1050) zum Steuern einer Temperatur der ein oder mehreren Komponenten (1040) durch Anpassen der der thermoelektrischen Kühlvorrichtung (1030) zugeführten Leistung.

11. Fahrzeug (1000) nach einem der Ansprüche 8 bis 10, ferner mit einem oder mehreren Elektromotoren (1054), wobei der Motor (1002) mindestens einen Teil der Leistung erzeugt, die von dem einen oder den mehreren Elektromotoren (1054) zum Bewegen des Fahrzeugs (1000) verbraucht wird, und wobei die eine oder die mehreren Komponenten (1040) ein Leistungskonditionierungssystem beinhalten, das die Leistung steuert, die dem einen oder den mehreren Elektromotoren zugeführt wird.

12. Fahrzeug nach Anspruch 8, bei dem die thermoelektrische Kühlvorrichtung (1030) eine Festkörper-Peltiereffekt-Wärmepumpe umfasst.

13. Verfahren mit den Schritten:
Leiten mindestens eines ersten Teils (1062) eines Kühlmittels (1060) in einem Kühlsystem von einem ersten Wärmetauscher (1010) zu einem zweiten Wärmetauscher (1020), um Wärme von einer warmen Seite (1032) einer thermoelektrischen Kühlvorrichtung (1030) aufzunehmen;
Kühlen einer oder mehrerer elektronischer Vorrichtungen unter Verwendung einer kalten Seite (1034) der thermoelektrischen Kühlvorrichtung (1030); und
Leiten mindestens eines zweiten Teils (1064) des Kühlmittels (1060) im Kühlsystem vom ersten Wärmetauscher (1010) zu einem Motor (1002),
wobei ein Kühlmittelauslass (1024) des zweiten Wärmetauschers (1020) mit einem Kühlmitteleinlass (1004) des Motors (1002) gekoppelt ist, und wobei der erste Teil (1062) des Kühlmittels (1060) der gleiche Teil des Kühlmittels (1060) ist wie der zweite Teil (1064) des Kühlmittels (1060).

## Revendications

1. Système (100) comprenant :
un moteur ayant une entrée de liquide de refroidissement de moteur (1004) et une sortie de liquide de refroidissement de moteur (1006) ;
un premier échangeur de chaleur (1010) ayant une première entrée d'échangeur de chaleur et une première sortie d'échangeur de chaleur (1014) ;
un second échangeur de chaleur (1020) ayant une seconde entrée d'échangeur de chaleur (1022) et une seconde sortie d'échangeur de chaleur (1024), la seconde sortie d'échangeur de chaleur (1024) étant couplée à l'entrée de liquide de refroidissement de moteur (1004) ;
un dispositif de refroidissement thermoélectrique (1030) en communication thermique avec le seconde échangeur de chaleur (1020) ; et
un ou plusieurs conduits pour transporter le liquide de refroidissement (1060) ;
dans lequel une première partie (1062) d'un écoulement de liquide de refroidissement provenant de la première sortie d'échangeur de chaleur (1014) est acheminée vers la seconde entrée d'échangeur de chaleur (1022) pour recevoir de la chaleur dégagée par un ou plusieurs dispositifs en communication thermique avec le dispositif de refroidissement thermoélectrique (1030), et
dans lequel une seconde partie (1064) de l'écoulement de fluide de refroidissement provenant de la première sortie d'échangeur de chaleur (1014) est acheminée vers l'entrée de liquide de refroidissement de moteur (1004) pour recevoir de la chaleur dégagée par le moteur,
**caractérisé en ce que**
la première partie (1062) du liquide de refroidissement (1060) est la même partie du liquide de refroidissement (1060) que la seconde partie (1064) du liquide de refroidissement (1060).

2. Système selon la revendication 1, comprenant en outre un système de commande (1050) couplé au dispositif de refroidissement thermoélectrique (1030), dans lequel le système de commande (1050) ajuste la puissance fournie au dispositif de refroidissement thermoélectrique (1030) pour commander une température des un ou plusieurs dispositifs en communication thermique avec le dispositif de refroidissement thermoélectrique (1030).

3. Système selon la revendication 1, dans lequel le moteur (1002) comprend un moteur à combustion interne.

4. Système selon la revendication 1, dans lequel le premier échangeur de chaleur (1010) comprend un radiateur.

5. Système selon la revendication 1, dans lequel la température des un ou plusieurs dispositifs en communication thermique avec le dispositif de refroidissement thermoélectrique (1030) est inférieure à la température de la première partie (1062) de l'écoulement du liquide de refroidissement (1060).

6. Système selon l'une quelconque des revendications 1 à 5, comprenant en outre un générateur thermoélectrique (1070) en communication thermique avec le premier échangeur de chaleur (1010), dans lequel le générateur thermoélectrique (1070) produit de la puissance sur la base d'un différentiel de température entre le liquide de refroidissement (1060) reçu à l'entrée du premier échangeur de chaleur et une température d'un côté froid (1034) du premier échangeur de chaleur (1010).

7. Système selon la revendication 1, dans lequel les un ou plusieurs dispositifs en communication thermique avec le dispositif de refroidissement thermoélectrique (1030) comprennent un module d'électronique de puissance.

8. Véhicule (1000) comprenant :
un moteur (1002) ;
un dispositif de refroidissement thermoélectrique (1030) pour refroidir un ou plusieurs composants (1040) du véhicule (1000) ;
un premier échangeur de chaleur (1010) pour recevoir de la chaleur à partir d'un côté chaud (1032) du dispositif de refroidissement thermoélectrique (1030) ; et
un second échangeur de chaleur (1020) pour extraire la chaleur à partir d'un liquide de refroidissement (1060), dans lequel une seconde partie (1064) du liquide de refroidissement (1060) est fournie du second échangeur de chaleur (1020) au moteur et une première partie (1062) du liquide de refroidissement (1060) est fournie du premier échangeur de chaleur (1010) au second échangeur de chaleur (1010),
**caractérisé en ce que**
la première partie (1062) du liquide de refroidissement (1060) est la même partie du liquide de refroidissement (1060) que la seconde partie (1064) du liquide de refroidissement (1060).

9. Véhicule (1000) selon la revendication 8, comprenant en outre un générateur thermoélectrique (1070) pour générer au moins une partie de la puissance utilisée par le dispositif de refroidissement thermoélectrique (1030) sur la base d'un différentiel de température au niveau du second échangeur de chaleur (1020).

10. Véhicule (1000) selon la revendication 8 ou 9, comprenant en outre un système de commande (1050) pour commander une température des un ou plusieurs composants (1040) en ajustant la puissance fournie au dispositif de refroidissement thermoélectrique (1030).

11. Véhicule (1000) selon l'une quelconque des revendications 8 à 10, comprenant en outre un ou plusieurs moteurs électriques (1054), dans lequel le moteur (1002) génère au moins une partie de la puissance utilisée par les un ou plusieurs moteurs électriques (1054) pour déplacer le véhicule (1000), et dans lequel les un ou plusieurs composants (1040) comprennent un système de conditionnement de puissance qui conditionne la puissance fournie aux un ou plusieurs moteurs électriques.

12. Véhicule selon la revendication 8, dans lequel le dispositif de refroidissement thermoélectrique (1030) comprend une pompe à chaleur à effet Peltier à l'état solide.

13. Procédé, comprenant les étapes consistant à :
acheminer au moins une première partie (1062) d'un liquide de refroidissement (1060) dans un système de refroidissement à partir d'un premier échangeur de chaleur (1010) vers un second échangeur de chaleur (1020) afin de recevoir de la chaleur à partir d'un côté chaud (1032) d'un dispositif de refroidissement thermoélectrique (1030) ;
refroidir un ou plusieurs dispositifs électroniques en utilisant un côté froid (1034) du dispositif de refroidissement thermoélectrique (1030) ; et
acheminer au moins une seconde partie (1064) du liquide de refroidissement (1060) dans le système de refroidissement à partir du premier échangeur de chaleur (1010) vers un moteur (1002),
dans lequel une sortie de liquide de refroidissement (1024) du second échangeur de chaleur (1020) est couplée à une entrée de liquide de refroidissement (1004) du moteur (1002), et dans lequel la première partie (1062) du liquide de refroidissement (1060) est la même partie du liquide de refroidissement (1060) que la seconde partie (1064) du liquide de refroidissement (1060).
